# EUROPEAN PATENT SPECIFICATION

(11) **EP 0 661 192 B1**
(45) Date of publication and mention of the grant of the patent: **01.09.1999**
(21) Application number: 94120764.9
(22) Date of filing: 27.12.1994
(51) Int. Cl.: B60Q 1/076

(54) **Vehicle lamp device**
Scheinwerfereinrichtung für Fahrzeuge
Dispositif pour phare de véhicule

(30) Priority: 27.12.1993 JP 33363693; 18.11.1994 JP 28470694
(43) Date of publication of application: 05.07.1995
(73) Proprietor: ICHIKOH INDUSTRIES LIMITED, Shinagawa-ku Tokyo 141 (JP)
(72) Inventor: Furuya, Takayuki, c/o Ichikoh Industries Ltd., Isehara-shi, Kanagawa 250 11 (JP)
(74) Representative: Grünecker, Kinkeldey, Stockmair & Schwanhäusser Anwaltssozietät

(56) References cited:
- EP-A- 0 588 715
- WO-A-90/07440
- DE-C- 4 108 211
- FR-A- 2 468 115

## Description

This invention relates to a vehicle lamp device comprising a lamp housing; and an optical axis adjusting mechanism, disposed in said lamp housing, for tilting a reflector on a pivot mechanism; said optical axis adjusting mechanism comprising: an adjusting rod stretched between a rear wall of said lamp housing and said reflector and moved forward and backward; and an electric driving unit, fastened to the rear wall of said lamp housing, for driving said adjusting rod to automatically tilt said reflector; and said electric driving unit is disposed inside said lamp housing.

Further, conventional vehicle lamps are shown by the European Patent Application 654 375 A1 and by the German Patent 41 08 211 C1.

The German Patent 41 08 211 C1 presents a generic vehicle lamp with an adjusting mechanism being driven by an electric driving unit. This driving unit, however, is disposed outside of the lamp device and also attached to the rear wall of the lamp housing from the outside. The driving unit being positioned outside of the lamp housing can lead to irregularities or damages of this driving unit. Furthermore, this vehicle lamp has a connecting unit, which is fixed to said lamp housing independently from the driving unit. Thus, mounting the driving unit and the connecting unit to the lamp housing affords two independent steps within the mounting process and, therefore, results in high manufacturing costs.

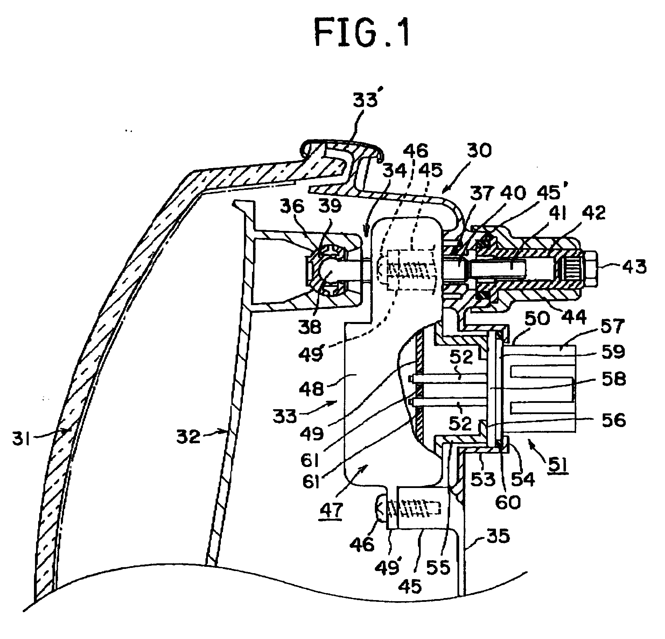

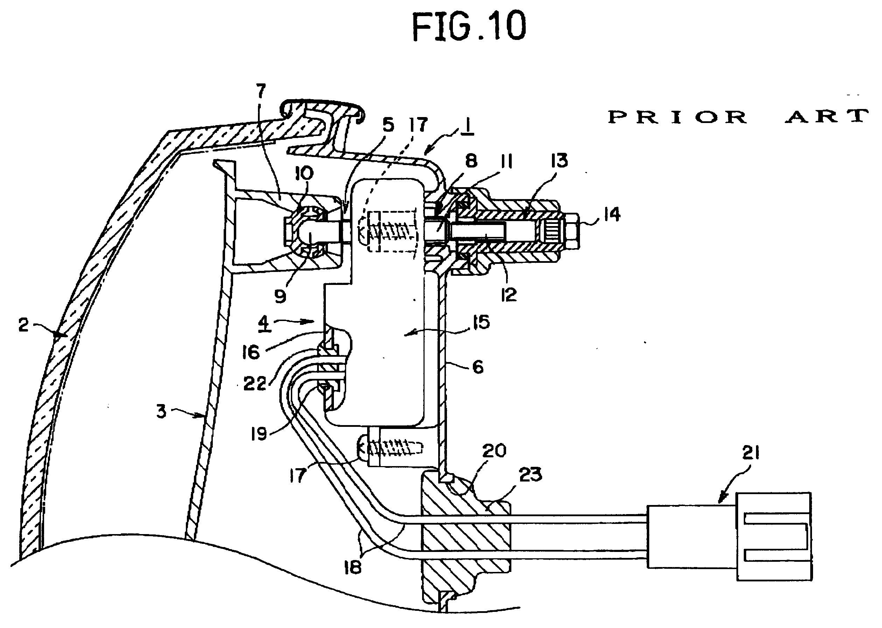

Further, a conventional vehicle lamp device is shown in Fig. 10, which is a partially sectional view showing the setting of a conventional electric driving unit lamp housing. In Fig 10, 1 is the lamp housing, 2 is a lens covering an opening of the lamp housing 1, 3 is a reflector for holding a bulb (not shown) disposed in the lamp housing 1 and for reflecting rays of light emitted from the bulb, and 4 is an optical axis adjusting mechanism for tilting the reflector 3 in order to adjust a direction of an optical axis of the bulb.

The optical axis adjusting mechanism 4 comprises a pivot mechanism (not shown) and an adjust screw mechanism 5 which are each disposed between the lamp housing 1 and the reflector 3.

The adjust screw mechanism 5 has an adjust screw 8 serving as an adjusting rod which is stretched between a rear wall 6 of the lamp housing 1 and a bearing portion 7 of the reflector 3 and is moved forward and backward. A spherical portion 9 is formed at an end of the adjust screw 8. A screw mounting 10 made from synthetic resin is movably held by the bearing portion 7. The spherical portion 9 is movably fitted in the screw mounting 10. The adjust screw 8 spirals forward and backward when handoperated, whereas the adjust screw 8 goes forward and backward without any rotation when operated automatically. A thread portion 11 and a flat engagement potion 12 are formed on the rear side of the adjust screw 8. An adjustment tube 13 is formed on the outer surface of the lamp housing 1. 14 is a small protuberance for adjustment. An electric driving unit 15 is mounted in the lamp housing 1. The electric driving unit 15 has a casing 16. The casing 16 includes an electric motor (not shown) serving as a driving actuator, a revolving mechanism for imparting the driving power of the electric motor to the adjust screw 8, a circuit substrate, etc. The casing 16 is fastened to the rear wall 6 of the lamp housing 1 by means of screws 17, 17 in a way that a worm located at the end of the power imparting mechanism gears with the thread portion 11 of the adjust screw 8. The fastening of the casing 16 to the lamp housing 1 is carried out before the fastening of the lens 2 and the reflector 3 to the lamp housing 1. An end of a wire harness 18 is connected to the circuit substrate through an opening 19 formed in the casing 16. The other end of the wire harness 18 is connected to a connecting member 21 through an opening 20 formed in the rear wall 6. Electric power is supplied to the electric motor via the wire harness 18. The opening 19 of the casing 16 is sealed with an elastic sealing member 22. The opening 20 of the rear wall 6 is sealed with an elastic sealing member 23.

The reflector 3 is automatically tilted on the pivot mechanism by actuating the electric driving unit 15. The reflector 3 is also tilted by operating the small protuberance 14 manually.

However, this conventional vehicle lamp device is constructed such that the elastic sealing member 23 for closing the opening 20 through which the wire harness 18 passes is simply fixed to the rear wall 6. Accordingly, if some external power is applied by which the wire harness 18 is pulled toward the outside of the lamp housing 1, the sealing member 23 will be detached from the opening 20. Further, there is a problem in that reliability is low to the sealing of the sealing member 23. Further, since a construction is adopted in which a place of the rear wall 6 for drawing the wire harness 18 is away from the electric driving unit 15, the opening 20 for drawing the connecting member 21 of the wire harness 18 toward the outside of the lamp housing 1 is made larger, and accordingly the lamp housing 1 itself becomes larger. Further, the placing of the electric driving unit 15 in the lamp housing 1 must be carried out independently of the fitting of the sealing member 23 in the opening 20. For this reason, the placing of the electric driving unit 15 therein is generally troublesome.

Therefore, it is an objective of the present invention to present a vehicle lamp device, which offers a secure location of the driving unit and at the same time reduces the manufacturing costs by simplifying the manufacturing process.

This objective is solved in an inventive manner by the single inventive concept according to the characterizing portions of the three independent claims 1, 11 and 14.

Further advantages of the invention are laid down in the subclaims.

The common inventive concept therein is to be seen in combining the feature of an electric driving unit arranged inside of the lamp housing with a way of arranging a connecting unit, responsible for power supply and steering information supply, to the lamp housing at the same step within the manufacturing process.

The invention will be described in detail, giving respect to the drawings, wherein:
Fig. 1 is a partially sectional view of a vehicle lamp device, explaining the setting of an electric driving unit in a lamp housing according to a first embodiment of the present invention.
Fig. 2 is an enlarged partially sectional view of an adjust screw mechanism according to the first embodiment.
Fig. 3 is a partially sectional view of a vehicle lamp device, explaining the setting of an electric driving unit in a lamp housing according to a second embodiment of the present invention.
Fig. 4 is a partially sectional view of a vehicle lamp device, explaining the setting of an electric driving unit in a lamp housing according to a third embodiment of the present invention.
Fig. 5 is a plan view showing a fixed state of a fastening ring and the electric driving unit each shown in Fig. 4.
Fig. 6 is a rear view of the lamp housing, explaining the installation of the electric driving unit in the lamp housing according to the third embodiment.
Fig. 7 is a partially sectional view of a vehicle lamp device, explaining the setting of an electric driving unit in a lamp housing according to a fourth embodiment of the present invention.
Fig. 8 is a partially sectional view of a vehicle lamp device, explaining the setting of an electric driving unit in a lamp housing according to a fifth embodiment of the present invention.
Fig. 9 is a partially sectional view of a vehicle lamp device, explaining the setting of an electric driving unit in a lamp housing according to a sixth embodiment of the present invention.
Fig. 10 is a partially sectional view showing the structure of an automatic optical axis adjusting device of a conventional vehicle lamp device.

### DESCRIPTION OF THE PREFERRED EMBODIMENTS

### First Embodiment

Fig. 1 is a partially sectional view of a vehicle lamp device according to a first embodiment of the present invention, explaining the setting of an electric driving unit in a lamp housing. In Fig. 1, 30 is the lamp housing, 31 is a lens covering a front opening area of the lamp housing 30, 32 is a reflector disposed in the lamp housing 30 for holding a bulb (not shown) and reflecting rays of light emitted from the bulb effectively, and 33 is an optical axis adjusting mechanism for tilting the reflector 32. The lens 31 is fixed to the lamp housing 30 by means of a clip member 33' for reinforcement.

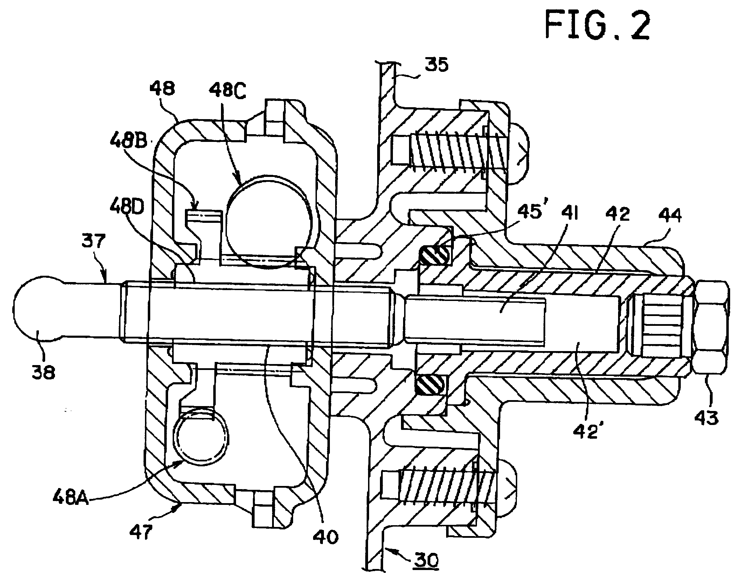

The optical axis adjusting mechanism 33 comprises a pivot mechanism (not shown) disposed between the lamp housing 30 and the reflector 32 and an adjust screw mechanism. The adjust screw mechanism has an adjust screw 37 functioning as an adjusting rod which is stretched between a rear wall 35 of the lamp housing 30 and a bearing portion 36 of the reflector 32 and is moved forward and backward. A sphere 38 is formed at an end of the adjust screw 37. A screw mounting 39 made from synthetic resin is movably mounted in the bearing portion 36. The sphere 38 is movably fitted in the screw mounting 39. A thread portion 40 is formed in the middle of the adjust screw 37. A rectangular engagement portion 41 is formed at the other end (rear end) of the adjust screw 37, as shown in Fig. 2. An adjusting tube 42 is formed on the outer surface of the lamp housing 30. 43 is a small protuberance for adjustment. The adjusting tube 42 is fixed to the rear wall 35 by means of a holding member 44. 45' is an O-ring. An engagement hole 42' engaged with the engagement portion 41 is formed in the adjusting tube 42. The engagement portion 41 juts out of the rear wall 35 and is fit in the engagement hole 42'. Bosses 45, 45 are formed on the inner surface of the rear wall 35. An electric driving unit 47 is fastened to the bosses 45, 45 by means of screws 46, 46. The electric driving unit 47 has a casing 48. The casing 48 has a flange 49' contacted with the boss 45.

The casing 48 houses an electric motor (not shown) as a driving actuator, a turn imparting mechanism 48A, such as a worm, for imparting the turns of the electric motor to the adjust screw 37, a potentiometer 48C, a worm wheel 48B, and a circuit substrate 49. The teeth of the worm wheel 48B gear with the threads of the worm 48A. Teeth 48D are formed on the inner circumference of the worm wheel 48B and are engaged with the thread portion 40 of the adjust screw 37. The rear wall 35 has an opening 50 at which the electric driving unit 47 is disposed. The adjust screw 37 spirals forward and backward when handoperated whereas it goes forward and backward without revolving when operated automatically.

The opening 50 serves to guide a connecting member 51 connected to a connector (not shown) for supplying electric power to the electric driving unit 47 and to guide terminal pins 52, 52 each as a conductive member. An end of the terminal pin 52 is fixed to the connecting member 51.

The rear wall 35 around the opening 50 is made cylindrical. The cylindrical part 53 of the rear wall 35 has an inward flange 54. The casing 48 is provided with a cylindrical leg 55 facing the cylindrical part 53 of the rear wall 35. A contact flange 56 is formed at the end of the leg 55. The connecting member 51 comprises a connecting head 57 and an engagement base plate 58. The connecting head 57 functions as a socket which is connected to the connector. The engagement base plate 58 is engaged with the inward flange 54 which is part of the rear wall around the opening 50. The engagement base plate 58 has a circular groove 59. An O-ring 60 which is a sealing member for sealing up the opening 50 is fitted in the circular groove 59. The circuit substrate 49 has holes 61, 61 for inserting the terminal pins 52, 52. The connecting member 51 is fastened to the casing 48 by inserting the terminal pins 52, 52 into the holes 61, 61.

The electric driving unit 47 is mounted in the lamp housing 30 as follows. The connecting member 51 is first connected to the electric driving unit 47 and then the connecting head 57 is caused to jut out of the opening 50 toward the outside of the lamp housing 30. After that, the positioning of the flange 49' is carried out with respect to the boss 45 and the screw 46 is tightened up. Thereby, the electric driving unit 47 is fastened to the lamp housing 30.

When fastened, the leg 55 of the casing 48 presses the connecting member 51 toward the rear wall around the opening 50. For this reason, the O-ring 60 is squeezed between the inward flange 54 and the engagement base plate 58. That is, the sealing of the opening 50 is carried out simultaneously with the mounting of the electric driving unit 47 in the lamp housing 30. Further, since the O-ring 60 is squeezed between the connecting member 51 and the rear wall around the opening 50 when the electric driving unit 47 is set in the lamp housing 30, good airtightness of the lamp housing 30 is maintained and, in addition, the O-ring 60 is prevented from falling off.

In the conventional electric driving unit 15 (see Fig. 10), the wire harness 18 of which one end is provided with the connecting member 21 is connected to the electric driving unit 15. Accordingly, various specifications have been presented due to different lengths of the wire harness 18 or different shapes of the connecting member 21 and, as a result, the storage or care of those parts has been complicated. However, according to the first embodiment of the present invention, the standardization of the specifications of the electric driving unit 15 itself can be achieved, thereby leading to orderly or systematic storage of the parts.

The first embodiment adopts an arrangement in which the terminal pins 52 are beforehand connected to the connecting member 51. Instead, an arrangement may be adopted in which the terminal pins 52 are first fixed to the circuit substrate 49 and then the connecting member 51 is connected to the terminal pins 52. Further, an arrangement may be adopted in which a cable (a lead) in place of the terminal pins 52 may be used to electrically connect the circuit substrate 49 to the connecting member 51.

Further, without separating the casing 48 from the connecting member 51 as in the first embodiment, the casing 48 may be integrated with the connecting member 51.

### Second Embodiment

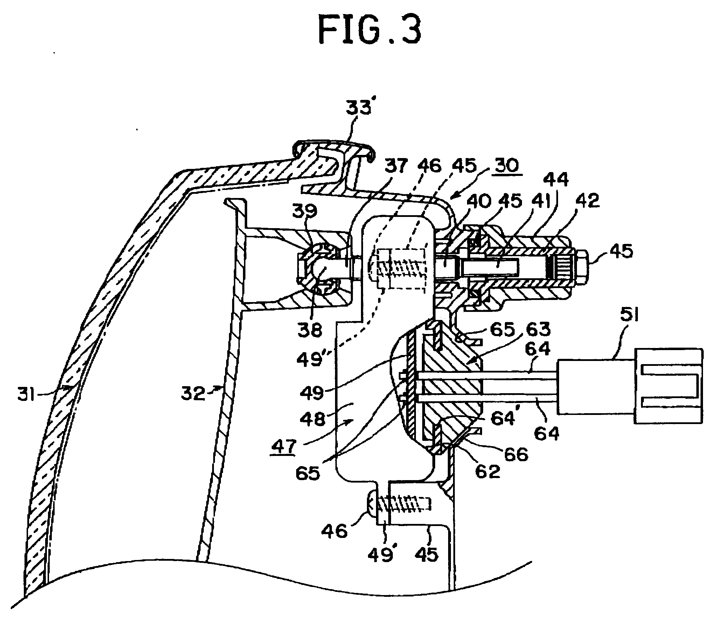

Fig. 3 is a sectional view for explaining the setting of the electric driving unit in the lamp housing according to a second embodiment. In the second embodiment, the same numerals are given to the same parts as in the first embodiment and a detailed description of them is omitted. A description will be given of only parts or arrangement different from those in the first embodiment.

As shown in Fig. 3, the casing 48 has an inward flange 62 as a sealing member fitting part. A sealing member 63 is fitted to the flange 62. The sealing member 63 is integrated with two leads 64, 64 which are each a conductive member. An end of the lead 64 is united with the circuit substrate 49 by solder, and the other end thereof is connected to the connecting member 51. The sealing member 63 has a circular groove 64' fitted to the inward flange 62 and a taper 65 gradually diminishing its diameter toward the outside of the lamp housing 30.

The rear wall 35 has a part 66 corresponding to the taper 65 of the sealing member 63 around the opening 50. The tapered part 66 also diminishes its diameter toward the outside of the lamp housing 30.

In order to fasten the electric driving unit 47 to the lamp housing 30, the connecting member 51 and the leads 64, 64 are first drawn out of the opening 50 toward the outside of the lamp housing 30, and then the sealing member 63 is caused to come into contact with the tapered part 66. After that, the screws 46 are tightened up. When the electric driving unit 47 is fastened to the lamp housing 30, the sealing member 63 is pressed to the tapered part 66 by means of the inward flange 62. Accordingly, airtightness of the lamp housing 30 is maintained in high condition. Further, since the sealing member 63 is squeezed between the tapered part 66 and the inward flange 62, the sealing member 63 does not fall from the opening 50 by the pulling force from the outside of the lamp housing 30, and accordingly reliability on the airtightness can be improved.

### Third Embodiment

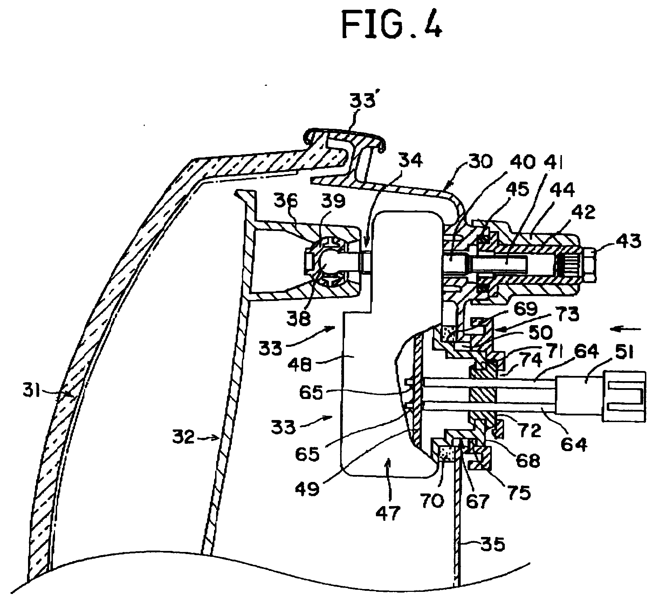

Fig. 4 is a sectional view for explaining the setting of the electric driving unit in the lamp housing according to a third embodiment. In the third embodiment, the same numerals are given to the same parts as in the second embodiment and a detailed description of them is omitted. A description will be given of only parts or arrangement different from those in the second embodiment.

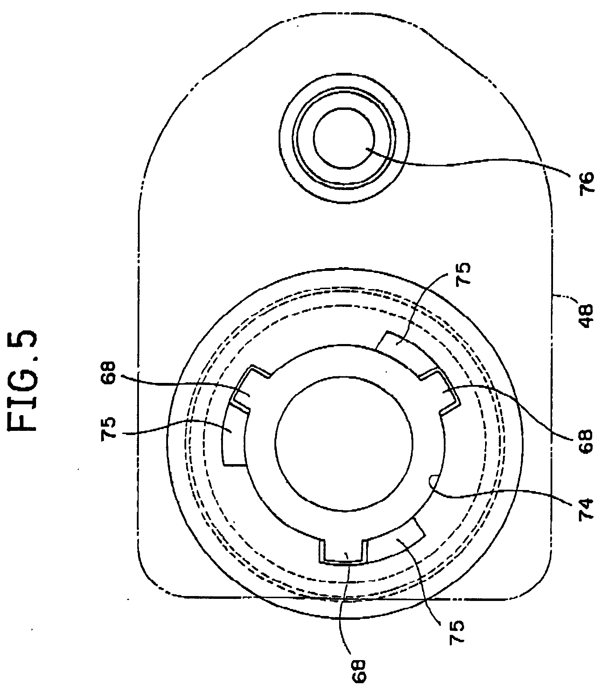

In the third embodiment, the bosses 45, 45 are not formed on the inner wall of the lamp housing 30. A cylindrical portion 67 as a projection jutting out of the opening 50 is formed on the casing 48 of the electric driving unit 47. As shown in Fig. 5, three engagement claws 68 are formed at equal intervals of space at the end of the cylindrical portion 67. The engagement claws 68 project in a direction opposite to the center of the cylindrical portion 67. A circular inward flange 71 is also formed at the end of the cylindrical portion 67. A sealing member 72 is fitted to the inward flange 71. The leads 64, 64 are drawn from the lamp housing 30 through the sealing member 72. The leads 64 are connected to the connecting member 51. Instead of the leads 64, terminal pins may be used. The cylindrical portion 67 has a circular difference part 69 in level at the basement of the projecting cylindrical portion 67. A circular sealing member 70 is fitted to the circular difference part 69.

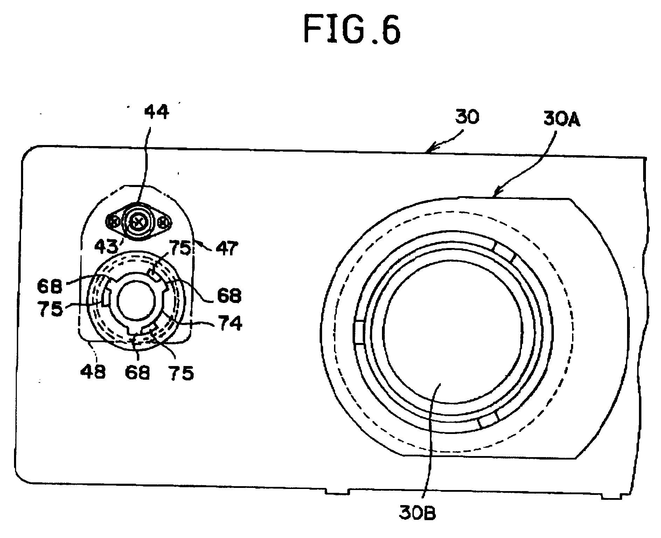

In the third embodiment, the electric driving unit 47 is fastened to the lamp housing 30 by means of a fastening ring 73 as a capping member. As shown in Fig. 5, the fastening ring 73 has an engagement plate 75 and a guide hole 74 for guiding the connecting member 51. The fastening of the electric driving unit 47 to the lamp housing 30 is carried out as follows. The connecting member 51, the leads 64, and the cylindrical portion 67 are first caused to jut out of the opening 50, and then the fastening ring 73 is pushed along the leads 64, 64 from the direction of an arrow (see Fig. 4). Next, the fastening ring 73 is placed on the cylindrical portion 67 of the casing 48 and is turned so that the engagement plate 75 can be engaged with the engagement claw 68. When engaged, the circular sealing member 70 is compressed between the casing 48 and the rear wall around the opening 50. In Fig. 5, 76 is an opening through which the adjust screw 37 of the electric driving unit 47 passes. Fig. 6 is a schematic view showing a rear surface of the lamp housing 30. In Fig. 6, 30A is a bulb fitting portion and 30B is a bulb inserting hole. The casing 48 of the electric driving unit 47 is shown by the phantom line, and the engagement plate 75 juts out of the opening 50 of the lamp housing 30.

According to the third embodiment, it is sufficient to make the shape of the opening 50 of the lamp housing 30 circular. Accordingly, the shaping of the lamp housing 30 is easier than in the other embodiments. Further, since the electric driving unit 47 is fastened to the lamp housing 30 by means of the fastening ring 73 only, a more facilitated and less limited construction process is performed than in the other embodiments in which the electric driving unit 47 is positioned at the bosses 45 and fastened to the lamp housing 30 by means of the screws 46.

### Fourth Embodiment

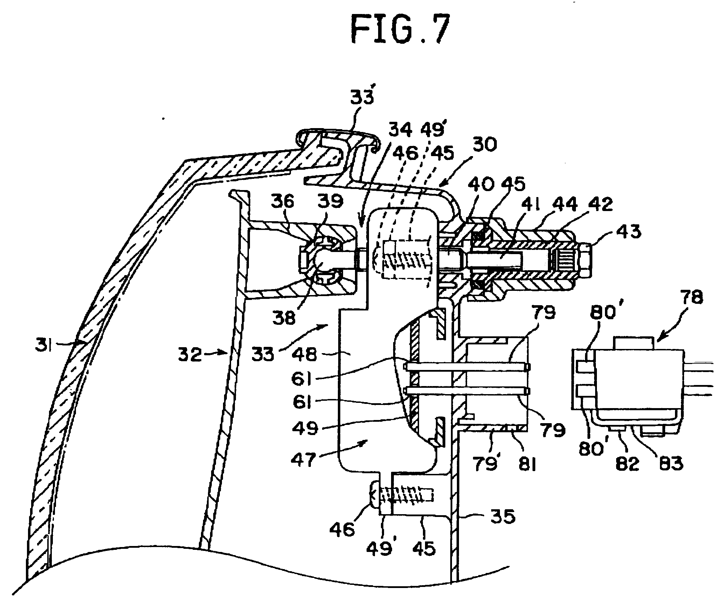

Fig. 7 is a sectional view for explaining the setting of the electric driving unit in the lamp housing according to a fourth embodiment of the present invention. In the fourth embodiment, the same numerals are given to the same parts as in the first embodiment and a detailed description of them is omitted. A description will be given of only parts or arrangement different from those in the first embodiment.

In the fourth embodiment, a connecting terminal pin 79, which electrically connects a connector 78 for supplying the electric driving unit 47 with electric power to the circuit of the electric driving unit 47, is formed by the insert molding method integrally with the rear wall 35 at which the electric driving unit 47 is disposed. Further, a connector holding part 79' for holding the connector 78 is integrated with the rear wall 35 of the lamp housing 30. The connector 78 includes base openings 80', 80' into which the terminal pins 79, 79 are inserted and a projection 82 which is fitted into an engagement hole 81 of the connector holding part 79'. The projection 82 is formed on a flexible part 83 of the connector 78. Part of the circuit substrate 49 is left bare without the covering of the casing 48. The exposed part of the circuit substrate 49 has holes 61, 61 into which the terminal pins 79 are inserted. The positioning of the electric driving unit 47 with respect to the lamp housing 35 is carried out by the terminal pins 79, 79.

The setting of the electric driving unit 47 in the lamp housing 30 is carried out as in the first embodiment. However, in the fourth embodiment, the sealing does not need to be done. Accordingly, the electric driving unit 47 is quickly placed in the lamp housing 30. Further, since there is no need of forming the opening 50 through which the terminal pin 79 is guided to the outside of the lamp housing 30 and the sealing member with which the opening 50 is closed, airtightness of the lamp housing 30 is maintained in high condition.

Further, reformation of the connector holding part 79' of the lamp housing 30 will suffice for responding to various connectors. Further, since there is no need of disposing the wire harness 18 on the side of the lamp housing 30, the specifications of the electric driving unit 15 itself can be standardized as in the first embodiment.

### Fifth Embodiment

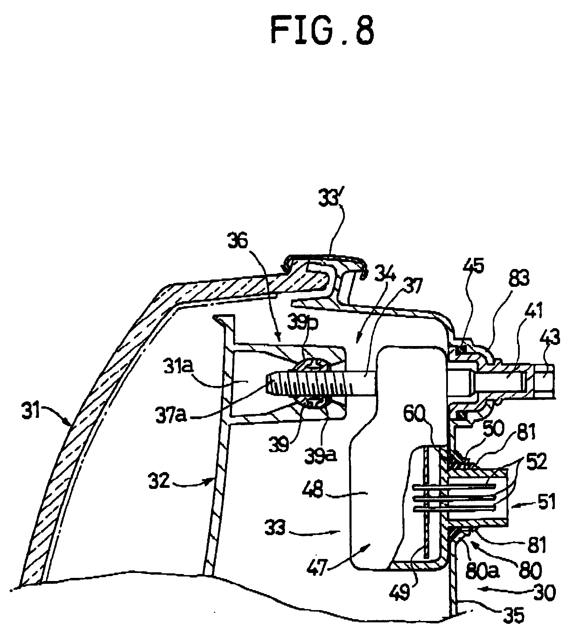

Fig. 8 is a sectional view for explaining the setting the electric driving unit in the lamp housing according to a fifth embodiment. In the fifth embodiment, the same numerals are given to the same parts as in the first embodiment and a detailed description of them is omitted. A description will be given of only parts or arrangement different from those in the first embodiment.

In the fifth embodiment, a cylindrical connecting member 51 is integrated with the casing 48 of the electric driving unit 47 and, in addition, three connecting terminal pins 52 are disposed in the connecting member 51 by the insert molding method. An end of each of the terminal pins 52 is united to the circuit substrate 49 by solder. The other end thereof juts out of the circuit substrate 49 toward the outside of the lamp housing 30 and is laid within the connecting member 51 in a bare state. An opening 50 for guiding the connecting member 51 to the outside of the lamp housing 30 is formed in the rear wall 35 at which the connecting member 51 is formed. The wall part 80 around the opening 50 of the lamp housing 30 has a tapered part 80a which becomes progressively smaller toward the outside of the lamp housing 30. Engagement projections 81 (for example, four projections) which are engaged with the end of the wall part 80 are formed on the outer surface of the connecting member 51. An externally circular and sectionally square sealing member 60 for sealing up the opening 50 is fitted to the projection base of the connecting member 51. Instead, the sealing member 60 may be formed on the connecting member 51 by the two-stage molding technique (that is, the sealing member 60 made from synthetic resin different in quality from that of the connecting member 51 may be integrated with the projection base of the connecting member 51 of the casing 48 as a finished molding). The tapered part 80a is flexed toward the outside of the lamp housing 30 when the connecting member 51 is inserted into the opening 50. The electric driving unit 47 is fastened to the lamp housing 30 by the engagement of the engagement projections 81 with the wall part 80 around the opening 50. The sealing member 60 is pressed and fastened to the wall part 80 simultaneously when the electric driving unit 47 is fastened to the lamp housing 30. The sealing member 60 is compressed and flattened by the tapered part 80a. An O-ring as the sealing member 60 maybe used.

According to the fifth embodiment, since the connecting member 51 integrated with the casing 48 of the electric driving unit 47 serves to fasten the electric driving unit 47 to the lamp housing 30, the number of constituent parts of the lamp device can be advantageously reduced. Further, since the terminal pins 52 are formed in the casing 48 by the insert molding method, sealing ability can be much improved. Further, the setting of the electric driving unit 47 in the lamp housing 30 is almost completed by fitting the connecting member 51 into the opening 50 of the lamp housing 30, setting efficiency can be also improved.

In the fifth embodiment, the holding member 44 for holding the adjusting tube 42 is not formed, but a pressing part 83, which performs the same function as the holding member 44, is integrated with the lamp housing 30. A detailed description of the function of the adjusting tube 42 is omitted because its function is the same as in the first embodiment. Further, each structure of the screw mounting 39 and the adjust screw 37 is slightly different from that in the first embodiment. That is, in the fifth embodiment, a thread portion 37a is formed on the end side of the adjust screw 37, and a tooth portion 39a which is engaged with the thread portion 37a is formed in the screw mounting 39. The bearing portion 36 of the reflector 32 has an empty space 31a into which the adjust screw 37 goes. The external surface 39b of the screw mounting 39 is made spherical. The spherical surface 39b ensures the rotation of the reflector 32.

### Sixth Embodiment

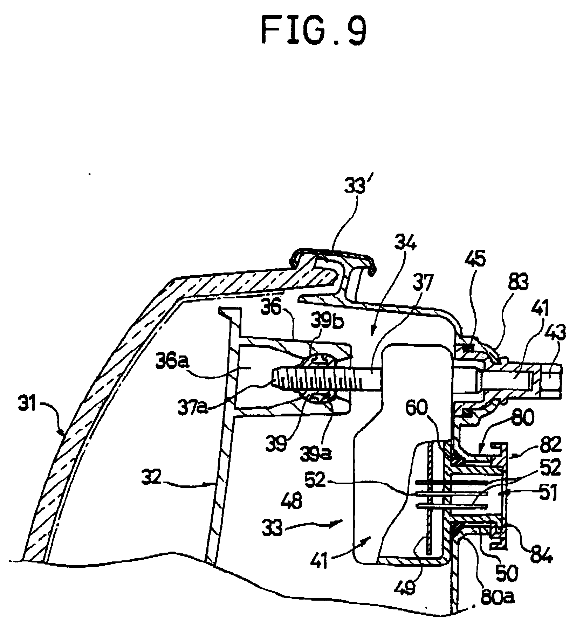

Fig. 9 is a sectional view for explaining the setting the electric driving unit in the lamp housing according to a sixth embodiment. In the sixth embodiment, the same numerals are given to the same parts as in the fifth embodiment and a detailed description of them is omitted. A description will be given of only parts or arrangement different from those in the fifth embodiment.

In the sixth embodiment, a capping member 82 is used to fasten the electric driving unit 47 in the lamp housing 30 from the outside. The structure and action of the capping member 82 are almost the same as those of the fastening ring 73 in the third embodiment. A proper number of engagement projections which are engaged with the capping member 82 are formed at proper places of the outer surface of the connecting member 51.

The action and effect in this embodiment are almost the same as those in the fifth embodiment.

## Claims

1. A vehicle lamp device comprising:
a lamp housing (30); and
an optical axis adjusting mechanism (33), disposed in said lamp housing (30), for tilting a reflector (32) on a pivot mechanism;
said optical axis adjusting mechanism (33) comprising;
an adjusting rod (37) stretched between a rear wall (35) of said lamp housing (30) and said reflector (32) and moved forward and backward; and
an electric driving unit (47), fastened to the rear wall (35) of said lamp housing (30), for driving said adjusting rod (37) to automatically tilt said reflector (32);
and said electric driving unit (47) is disposed inside said lamp housing (30),
**characterized in that** said vehicle lamp device further comprises:
an opening (50), formed in the rear wall (35) of said lamp housing (30) at which said electric driving unit (47) is disposed, for guiding a conductive member (52) which is connected to a connector for supplying electric power to said electric driving unit (47) through a connecting member (51) to the outside of said housing (30); and
a sealing member (60), fastened to said lamp housing (30) and pressed against the rear wall (35) all around said opening (50) for sealing up said opening (50) simultaneously with the fixation of the electric driving unit (47) to the lamp housing (30).

2. A vehicle lamp device according to claim 1, **characterized in that** said connecting member (51) has a connecting head (57) and an engagement base plate (58), said connecting head (57) being connected to said connector and jutting out of said opening toward the outside of said lamp housing (30), said engagement base plate (58) being engaged with the rear wall (35) around said opening (50), said connecting member (51) being fastened to said lamp housing (30) when said electric driving unit (47) is fastened to said lamp housing (30), and said sealing member (60) being placed between said engagement base plate (58) and the rear wall (35) around said opening (40).

3. A vehicle lamp device according to claim 2, **characterized in that** said electric driving unit (47) has a casing (48) and is fastened to said lamp housing (30) from the inside of said lamp housing (30) by means of fastening means (45,46), said casing (48) having a leg (55) for pressing said engagement base plate (58) against the rear wall (35) around said opening (50) when said electric driving unit (47) is fastened to said lamp housing (30).

4. A vehicle lamp device according to claim 1, **characterized in that** said electric driving unit (47) has a casing (48) and is fastened to said lamp housing (30) from the inside of said lamp housing (30) by means of fastening means (45,46), said casing (48) having a connecting member (52) integrated with said casing (48).

5. A vehicle lamp device according to claim 1, **characterized in that** said sealing member (63) is integrally held by said electric driving unit (47).

6. A vehicle lamp device according to claim 5, **characterized in that** said sealing member (63) and the rear wall (35) around said opening (50) each have a taper portion (63,65) the diameter of which is gradually diminished toward the outside of said lamp housing (30), said electric driving unit (47) being fastened to said lamp housing (30) by means of fastening means (45,46) from the inside of said lamp housing (30).

7. A vehicle lamp device according to claim 6, **characterized in that** said connecting member (64) is drawn through said opening (50) toward the outside of said lamp housing (30).

8. A vehicle lamp device according to claim 1, **characterized in that** said electric driving unit (47) has a casing (48), said casing including a projection (67) which juts out of said opening (50) toward the outside of said lamp housing (30), and engagement claws (68) which are engaged with a capping member (43) for fastening said electric driving unit (47) to said lamp housing (30) from the outside of said lamp housing (30) are formed on said projection (67).

9. A vehicle lamp device according to claim 8, **characterized in that** said sealing member (74) is squeezed between said casing (30) and the rear wall (35) around said opening (50).

10. A vehicle lamp device according to claim 1 or 4, **characterized in that** said adjusting rod (37) rotates and goes forward and backward when operated manually whereas said adjusting rod (37) goes forward and backward without rotation when operated automatically.

11. A vehicle lamp device comprising:
a lamp housing (30); and
an optical axis adjusting mechanism (33), disposed in said lamp housing (30) for tilting a reflector (32) on a pivot mechanism;
said optical axis adjusting mechanism (33) comprising:
an adjusting rod (37) stretched between a rear wall (35) of said lamp housing (30) and said reflector (32) and moved forward and backward; and
an electric driving unit (47), fastened to the rear wall (35) of said lamp housing (30), for driving and adjusting rod (37) to automatically tilt said reflector; and
said electric driving unit (47) is disposed inside said lamp housing (30),
**characterized in that** said vehicle lamp device further comprises:
a connecting terminal pin (79), formed by an insert molding method in the rear wall (35) of said lamp housing (30) at which said electric driving unit (47) is disposed, for electrically connecting a connector (78) for supplying electric power to said electric driving unit (47) to a circuit of said electric driving unit (47).

12. A vehicle lamp device according to claim 11, **characterized in that** said vehicle lamp device further comprises a connector holding portion (79) integrated with the rear wall (35) of said lamp housing (30) at which said electric driving unit (47) is disposed, for holding said connector (78); said electric driving unit (47) being fastened to said lamp housing (30) from the inside of said lamp housing (30) by means of fastening means (45,46).

13. A vehicle lamp device according to claim 11, **characterized in that** said adjusting rod (37) rotates and goes forward and backward when operated manually whereas said adjusting rod (37) goes forward and backward without rotation when operated automatically.

14. A vehicle lamp device comprising:
a lamp housing (30); and
an optical axis adjusting mechanism (33), disposed in said lamp housing (30), for tilting a reflector (32) on a pivot mechanism;
said optical axis adjusting mechanism (33) comprising:
an adjusting rod (37) being stretched between a rear wall (35) of said lamp housing (30) and said reflector (32) and moved forward and backward; and an electric driving unit (47), fastened to the rear wall (35) of said lamp housing (30), for driving said adjusting rod (37) to automatically tilt said reflector (32);
and said electric driving unit (47) is disposed inside said lamp housing (30),
**characterized in that** said electric driving unit (47) has a casing (48), said casing (48) having:
a connecting member (51) integrated with said casing (48) and connected to a connector for supplying electric power to said electric driving unit (47); and
connecting terminal pins (52) formed in said casing (48) by an insert molding method;
said rear wall (35) has an opening (50) for guiding said connecting member (51) to the outside of said lamp housing (30) at a place where said connecting member (51) is formed; and
a sealing member (60) for sealing up said opening (50) is pressed and fastened to a rear wall part (80) around said opening (50) simultaneously with the fastening of said electric driving unit (47) to said lamp housing (30).

15. A vehicle lamp device according to claim 14, **characterized in that** said vehicle lamp device further comprises engagement projections (81) formed on the outer surface of said connecting member (51) and engaged with the rear wall (80) around said opening (50), said sealing member (60) being fitted to a projection base of said connecting member (51), and said electric driving unit (47) being fastened to said lamp housing (30) by engagement of said engagement projections (81) with the rear wall (80) of said opening (50).

16. A vehicle lamp device according to claim 15, **characterized in that** the rear wall part (80) around said opening (50) has a taper portion (80a) a hole diameter of which gradually decreases toward the outside of said lamp housing (30), said taper portion (80a) being flexed toward the outside of said lamp housing (30) when said connecting member (51) is inserted into said opening (50).

17. A vehicle lamp device according to claim 14, **characterized in that** said vehicle lamp device further comprises:
a capping member (82) for fastening said electric driving unit (47) to said lamp housing (30), said capping member (82) being put on from the outside of said lamp housing (30); and
an engagement projection formed around said connecting member and engaged with said capping member (82).

18. A vehicle lamp device according to claim 17, **characterized in that** the rear wall part (80) around said opening (50) has a taper portion (80a), a hole diameter of which gradually decreases toward the outside of said lamp housing (30), said taper portion (80a) being flexed toward the outside of said lamp housing (30) when said connecting member (51) is inserted into said opening (50).

## Patentansprüche

1. Scheinwerfereinrichtung für ein Fahrzeug mit:
einem Scheinwertergehäuse (30); und
einem Einstellmechanismus der optischen Achse (33), der in dem Scheinwerfergehäuse (30) angeordnet ist und zum Kippen eines Reflektors (32) auf einem Drehpunktmechanismus dient;
wobei der Einstellmechanismus der optischen Achse (33) eine Stellstange (37) umfaßt, die sich zwischen einer Rückwand (35) des Scheinwerfergehäuses (30) und dem Reflektor (32) erstreckt und vorwärts und rückwärts bewegbar ist; und
eine elektrische Antriebseinheit (47) umfaßt, die an der Rückwand des Scheinwerfergehäuses (30) befestigt ist, als Antrieb der Stellstange (37) zum automatischen Kippen des Reflektors (32);
und wobei die elektrische Antriebseinheit (47) innerhalb des Scheinwerfergehäuses (30) angeordnet ist,
**dadurch gekennzeichnet,** daß
die Scheinwerfereinrichtung weiterhin eine Öffnung (50) umfaßt, die in der Rückwand (35) des Scheinwerfergehäuses ausgebildet ist, an der die elektrische Antriebseinheit (47) angeordnet ist, um ein leitendes Teil (52) durchzuführen, das mit einem Stecker verbunden ist, um die elektrischen Antriebseinheit (47) durch ein Verbindungselement (51) zur Außenseite des Gehäuses (30) zu versorgen; und
ein Dichtelement (60) umfaßt, das am Scheinwerfergehäuse (30) befestigt ist, und gegen die Rückwand (35) ganz um die Öffnung (50) herum angedrückt wird, um die Öffnung (50) gleichzeitig mit der Befestigung der elektrischen Antriebseinheit (47) und dem Scheinwerfergehäuse (30) abzudichten.

2. Scheinwerfereinrichtung für ein Fahrzeug nach Anspruch 1, **dadurch gekennzeichnet,** daß das Verbindungselement (51) einen Verbindungskopf (57) und eine Eingriffsbasisplatte (58) aufweist, wobei der Verbindungskopf (57) mit dem Stecker verbunden ist und durch die Öffnung zur Außenseite des Scheinwerfergehäuses (30) hin herausragt, wobei die Verbindungsbasisplatte (58) mit der Rückwand (35) um die Öffnung (50) herum in Eingriff steht, und wobei das Verbindungselement (51) zu dem Scheinwerfergehäuse (30) befestigt ist, sobald die elektrische Antriebseinheit (47) an dem Scheinwerfergehäuse (30) befestigt ist, und das Dichtelement (60) zwischen der Eingriffsbasisplatte (58) und der Rückwand (35) um die Öffnung (40) herum angeordnet ist.

3. Scheinwerfereinrichtung für ein Fahrzeug gemäß Anspruch 2, **dadurch gekennzeichnet,** daß die elektrische Antriebseinheit (47) ein Gehäuse (48) aufweist und an dem Scheinwerfergehäuse (30) von der Innenseite des Scheinwerfergehäuses (30) her durch Befestigungseinrichtungen (45, 46) befestigt ist, wobei das Gehäuse (48) einen Fuß (55) aufweist, um die Eingriffsgrundplatte (58) gegen die Rückwand (35) um die Öffnung (50) herum anzudrücken, wenn die elektrische Antriebseinheit (47) an dem Scheinwerfergehäuse (30) befestigt ist.

4. Scheinwerfereinrichtung für ein Fahrzeug gemäß Anspruch 1, **dadurch gekennzeichnet,** daß die elektrische Antriebseinheit (47) ein Gehäuse (48) aufweist und von der Innenseite des Scheinwerfergehäuses (30) her an dem Scheinwerfergehäuse (30) mittels Befestigungseinrichtungen (45, 46) befestigt ist, wobei das Gehäuse (48) ein Verbindungselement (52) aufweist, das in das Gehäuse (48) integriert ist.

5. Scheinwerfereinrichtung für ein Fahrzeug gemäß Anspruch 1, **dadurch gekennzeichnet,** daß das Dichtelement (63) integral durch die elektrische Antriebseinheit (47) gehalten ist.

6. Scheinwerfereinrichtung für ein Fahrzeug gemäß Anspruch 5, **dadurch gekennzeichnet,** daß das Dichtelement (63) und die Rückwand (35) um die Öffnung (50) jeweils einen sich verjüngenden Abschnitt (63, 65) aufweisen, dessen Durchmesser sich zur Außenseite des Scheinwerfergehäuses (30) hin allmählich verringert, und wobei die elektrische Antriebseinheit (47) an dem Scheinwerfergehäuse (30) mittels Befestigungselementen (45, 46) von der Innenseite des Scheinwerfergehäuses (30) her befestigt ist.

7. Scheinwerfereinrichtung für ein Fahrzeug gemäß Anspruch 6, **dadurch gekennzeichnet,** daß das Verbindungselement (64) durch die Öffnung (50) hindurch in Richtung der Außenseite des Scheinwerfergehäuses (30) durchgezogen ist.

8. Scheinwerfereinrichtung für ein Fahrzeug gemäß Anspruch 1, **dadurch gekennzeichnet,** daß die elektrische Antriebseinheit ein Gehäuse (48) aufweist, wobei das Gehäuse einen Vorsprung (67) hat, der durch die Öffnung (50) in Richtung zur Außenseite des Scheinwerfergehäuses (30) hin herausragt und wobei Eingriffsklauen (68), die in Eingriff mit einem Deckelteil (43) zur Befestigung der elektrischen Antriebseinheit (47) am Scheinwerfergehäuse (30) von der Außenseite des Scheinwerfergehäuses (30) her an diesen Vorsprüngen (67) ausgebildet sind.

9. Scheinwerfereinrichtung für ein Fahrzeug gemäß Anspruch 8, **dadurch gekennzeichnet,** daß das Dichtelement (74) zwischen dem Gehäuse (30) und der Rückwand (35) um die Öffnung (50) herum zusammengedrückt ist.

10. Scheinwerfereinrichtung für ein Fahrzeug gemäß Anspruch 1 oder 4, **dadurch gekennzeichnet,** daß die Stellstange (37) sich dreht und vorwärts oder rückwärts bewegt, wenn sie per Hand bedient wird, wohingegen sich die Stellstange (37) vorwärts oder rückwärts ohne Drehung bewegt, wenn sie automatisch angetrieben ist.

11. Scheinwerfereinrichtung für ein Fahrzeug mit:
einem Scheinwerfergehäuse (30); und
einem Einstellmechanismus der optischen Achse (33), der in dem Scheinwerfergehäuse (30) angeordnet ist und zum Kippen eines Reflektors (32) auf einem Drehpunktmechanismus dient;
wobei der Einstellmechanismus der optischen Achse (33) eine Stellstange (37) umfaßt, die sich zwischen einer Rückwand (35) des Scheinwerfergehäuses (30) und dem Reflektor (32) erstreckt, und vorwärts und rückwärts bewegbar ist; und
eine elektrische Antriebseinheit (47) umfaßt, die an der Rückwand (35) des Scheinwerfergehäuses (30) befestigt ist zum Betreiben der Stellstange (37), um den Reflektor automatisch zu kippen; und
wobei die elektrische Antriebseinheit (47) innerhalb des Scheinwerfergehäuses (30) angeordnet ist,
**dadurch gekennzeichnet,** daß die Scheinwerfereinrichtung weiterhin einen Verbindungsanschlußstift (79) aufweist, der durch ein Spritzgießverfahren in der Rückwand (35) des Scheinwerfergehäuses (30) ausgebildet ist, an der die elektrische Antriebseinheit (47) angeordnet ist, zum elektrischen Verbinden eines Steckers (78) mit dem Stromkreis der elektrischen Antriebseinheit (47), um der elektrischen Antriebseinheit (47) elektrische Energie zuzuführen.

12. Scheinwerfereinrichtung für ein Fahrzeug nach Anspruch 11, **dadurch gekennzeichnet,** daß die Scheinwerfereinrichtung weiterhin einen Steckerhalteabschnitt (79) umfaßt, der integral mit der Rückwand (35) des Scheinwerfergehäuses (30) ausgebildet ist, an der die elektrische Antriebseinheit (47) angeordnet ist zum Halten des Steckers (78), wobei die elektrische Antriebseinheit (47) an dem Scheinwerfergehäuse (30) von der Innenseite des Scheinwerfergehäuses (30) mit Hilfe von Befestigungsmitteln (45, 46) befestigt ist.

13. Scheinwerfereinrichtung für ein Fahrzeug nach Anspruch 11, **dadurch gekennzeichnet,** daß die Stellstange (37) sich dreht und vorwärts und rückwärts bewegt, wenn sie manuell betrieben wird, wohingegen die Stellstange (37) sich vorwärts und rückwärts bewegt ohne Drehung, wenn sie automatisch betrieben wird.

14. Scheinwerfereinrichtung für ein Fahrzeug mit:
einem Scheinwerfergehäuse (30); und
einem Einstellmechanismus der optischen Achse (33), der in dem Scheinwerfergehäuse (30) angeordnet ist, und zum Kippen eines Reflektors (32) auf einem Drehpunktmechanismus dient;
wobei der Einstellmechanismus der optischen Achse (33) eine Stellstange (37) umfaßt, die sich zwischen einer Rückwand (35) des Scheinwerfergehäuses (30) und dem Reflektor (32) erstreckt und vorwärts und rückwärts bewegbar ist; und
eine elektrische Antriebseinheit (47) umfaßt, die an der Rückwand (35) des Scheinwerfergehäuses (30) befestigt ist, als Antrieb der Stellstange (37) zum automatischen Kippen des Reflektors (32), und wobei die elektrische Antriebseinheit innerhalb des Scheinwerfergehäuses angeordnet ist, **dadurch gekennzeichnet,** daß die elektrische Antriebseinheit (47) ein Gehäuse (48) umfaßt, wobei das Gehäuse ein Verbindungselement (51) besitzt, das integral mit dem Gehäuse (48) ausgebildet ist, und mit einem Stecker zum Versorgen der elektrischen Antriebseinheit (47) mit elektrischer Energie verbunden ist; und Verbindungsanschlußstifte (52) umfaßt, die in dem Gehäuse (48) durch ein Spritzgießverfahren ausgebildet sind; wobei die Rückwand (35) eine Öffnung (50) aufweist, um das Verbindungselement (51) zur Außenseite des Scheinwerfergehäuses (30) hinzuführen an einer Stelle, wo das Verbindungselement (51) ausgebildet ist; und
ein Dichtelement (60) zum Abdichten der Öffnung (50) gleichzeitig mit dem Befestigen der elektrischen Antriebseinheit (47) an dem Scheinwerfergehäuse (30) gegen ein Rückwandteil (80) um die Öffnung (50) herum angedrückt und befestigt wird.

15. Scheinwerfervorrichtung für ein Fahrzeug nach Anspruch 14, **dadurch gekennzeichnet,** daß die Scheinwerfervorrichtung für ein Fahrzeug weiterhin Eingriffsvorsprünge (81) umfaßt, die auf der äußeren Oberfläche des Verbindungselementes (51) ausgebildet sind, und mit dem Rückwandteil (80) um die Öffnung (50) in Eingriff stehen, wobei das Dichtelement (60) an einem Basisvorsprung des Verbindungselementes (51) angepaßt ist, und wobei die elektrische Antriebseinheit (47) an dem Scheinwerfergehäuse (30) befestigt ist, in dem die Eingriffsvorsprünge (81) mit dem Rückwandteil (80) der Öffnung (50) in Eingriff gebracht sind.

16. Scheinwerfereinrichtung für ein Fahrzeug nach Anspruch 15, **dadurch gekennzeichnet,** daß das Rückwandteil (80) einen sich verjüngenden Abschnitt (80a) aufweist, dessen Lochdurchmesser zur Außenseite des Scheinwerfergehäuses (30) hin sich langsam verringert, wobei der sich verjüngende Abschnitt (80a) zur Außenseite des Scheinwerfergehäuses (30) hingebogen wird, wenn das Verbindungselement (51) in die Öffnung (50) eingefügt ist.

17. Scheinwerfereinrichtung für ein Fahrzeug nach Anspruch 14, **dadurch gekennzeichnet,** daß die Scheinwerfereinrichtung für ein Fahrzeug weiterhin ein Dekkelelement (82) zum Befestigen der elektrischen Antriebseinheit (47) an dem Scheinwerfergehäuse (30) umfaßt, wobei das Deckelelement (82) von der Außenseite auf das Scheinwerfergehäuse (30) aufsetzbar ist; und ein Eingriffsvorsprung um das Verbindungselement ausgebildet ist, und sich im Eingriff mit dem Deckelelement (82) befindet.

18. Scheinwerfereinrichtung für ein Fahrzeug nach Anspruch 17, **dadurch gekennzeichnet,** daß das rückwärtige Wandteil (80) um die Öffnung (50) einen sich verjüngenden Abschnitt (80a) umfaßt, dessen Lochdurchmesser sich allmählich zur Außenseite des Scheinwerfergehäuses (30) hin verjüngt, wobei der sich verjüngende Abschnitt (80a) zur Außenseite des Scheinwerfergehäuses (30) hin gebogen ist, wenn das Verbindungselement (51) in die Öffnung (50) eingefügt ist.

## Revendications

1. Un dispositif pour phare de véhicule comprenant :
un boîtier de phare (30); et
un mécanisme de réglage d'axe optique (33) disposé dans ledit boîtier de phare (30) pour incliner un réflecteur (32) sur un mécanisme de pivotement;
ledit mécanisme de réglage d'axe optique (33) comprenant :
une tige de réglage (37) étirée entre une paroi arrière (35) dudit boîtier de phare (30) et ledit réflecteur (32) est déplacée vers l'avant et vers l'arrière; et
une unité d'entraînement électrique (47) fixée à la paroi arrière (35) dudit boîtier de phare (30) pour entraîner ladite tige de réglage (37) afin d'incliner automatiquement ledit réflecteur (32); et ladite unité d'entraînement électrique (47) est disposée à l'intérieur dudit boîtier de phare (30),
caractérisé en ce que ledit dispositif pour phare de véhicule comprend en outre :
une ouverture (50), formée dans la paroi arrière (35) dudit boîtier de phare (30) sur laquelle est disposée ladite unité d'entraînement électrique (47), pour guider un organe conducteur (52) qui est relié à un connecteur fournissant une puissance électrique à ladite unité d'entraînement électrique (47) via un organe de connexion (51) vers l'extérieur dudit boîtier (30); et
un organe d'étanchéité (60), fixé audit boîtier de phare (30), est pressé contre la paroi arrière (35) tout autour de ladite ouverture (50), pour isoler hermétiquement ladite ouverture (50) simultanément à la fixation de l'unité d'entraînement électrique (47) au boîtier de phare (30).

2. Un dispositif pour phare de véhicule selon la revendication 1, caractérisé en ce que ledit organe de connexion (51) présente une tête de connexion (57) et une plaque de base de prise (58), ladite tête de connexion (57) étant reliée audit connecteur et faisant saillie de ladite ouverture vers l'extérieur dudit boîtier de phare (30), ladite plaque de base de mise en prise (58) étant engagée contre la paroi arrière (35) autour de ladite ouverture (50), ledit organe de connexion (51) étant fixé audit boîtier de phare (30) lorsque ladite unité d'entraînement électrique (47) est fixée audit boîtier de phare (30), et ledit organe d'étanchéité (60) étant placé entre ladite plaque de base de mise en prise (58) et la paroi arrière (35) autour de ladite ouverture (40).

3. Un dispositif pour phare de véhicule selon la revendication 2, caractérisé en ce que ladite unité d'entraînement électrique (47) présente un carter (48) et est fixé audit boîtier de phare (30) depuis l'intérieur dudit boîtier de phare (30) à l'aide de moyens de fixation (45, 46), ledit carter (48) ayant une patte (55) destinée à presser ladite plaque de base de mise en prise (58) contre la paroi arrière (35) autour de ladite ouverture (50), lorsque ladite unité d'entraînement électrique (47) est fixée audit boîtier de phare (30).

4. Un dispositif pour phare de véhicule selon la revendication 1, caractérisé en ce que ladite unité d'entraînement électrique (47) présente un carter (48) et est fixée audit boîtier de phare (30) depuis l'intérieur dudit boîtier de phare (30) par des moyens de fixation (45, 46), ledit carter (48) ayant un organe de connexion (52) intégré audit carter (48).

5. Un dispositif pour phare de véhicule selon la revendication 1, caractérisé en ce que ledit organe d'étanchéité (63) est maintenu d'un seul tenant par ladite unité d'entraînement électrique (47).

6. Un dispositif pour phare de véhicule selon la revendication 5, caractérisé en ce que ledit organe d'étanchéité (63) et la paroi arrière (35) autour de ladite ouverture (50) présentent chacun une partie d'effilement (63, 65) dont le diamètre diminue graduellement vers l'extérieur dudit boîtier de phare (30), ladite unité d'entraînement électrique (47) étant fixée audit boîtier de phare (30) par des moyens de fixation (45, 46) depuis l'intérieur dudit boîtier de phare (30).

7. Un dispositif pour phare de véhicule selon la revendication 6, caractérisé en ce que ledit organe de connexion (64) est tiré à travers ladite ouverture (50) vers l'extérieur dudit boîtier de phare (30).

8. Un dispositif pour phare de véhicule selon la revendication 1, caractérisé en ce que ladite unité d'entraînement électrique (47) présente un carter (48), ledit carter comprenant une saillie (67) qui fait saillie de ladite ouverture (50) vers l'extérieur dudit boîtier de phare (30), et des griffes de mise en prise (68), qui sont engagées contre un organe d'encapsulage (43), pour fixer ladite unité d'entraînement électrique (47) audit boîtier de phare (30), depuis l'extérieur dudit boîtier de phare (30), sont formées sur ladite saillie (67).

9. Un dispositif pour phare de véhicule selon la revendication 8, caractérisé en ce que ledit organe d'étanchéité (74) est écrasé entre ledit carter (30) et la paroi arrière (35) autour de ladite ouverture (50).

10. Un dispositif pour phare de véhicule selon la revendication 1 ou 4, caractérisé en ce que ladite tige de réglage (37) tourne et se déplace vers l'avant et vers l'arrière lorsqu'elle est actionnée manuellement, tandis que ladite tige de réglage (37) se déplace vers l'avant et vers l'arrière sans tourner lorsqu'elle est actionnée automatiquement.

11. Un dispositif pour phare de véhicule, comprenant :
un boîtier de phare (30); et
un mécanisme de réglage d'axe optique (33) disposé dans ledit boîtier de lampe (30) pour incliner un réflecteur (32) sur un mécanisme de pivotement;
ledit mécanisme de réglage d'axe optique (33) comprenant :
une tige de réglage (37), étirée entre une paroi arrière (35) dudit boîtier de phare (30) et ledit réflecteur (32) est déplacé vers l'avant et vers l'arrière; et
une unité d'entraînement électrique (47), fixée à la paroi arrière (35) dudit boîtier de phare (30) pour entraîner et régler la tige (37), afin d'incliner automatiquement ledit réflecteur; et
ladite unité d'entraînement électrique (47) est disposée à l'intérieur dudit boîtier de phare (30),
caractérisé en ce que ledit dispositif pour phare de véhicule comprend en outre :
une tige de borne de connexion (79), formée par un procédé de moulage à insertion dans la paroi arrière (35) dudit boîtier de phare (30) sur laquelle est disposée ladite unité d'entraînement électrique (47), pour relier électriquement un connecteur (78) servant à fournir une puissance électrique à ladite unité d'entraînement électrique à un circuit de ladite unité d'entraînement électrique (47).

12. Un dispositif pour phare de véhicule selon la revendication 11, caractérisé en ce que ledit dispositif pour phare de véhicule comprend en outre une partie de maintien de connecteur (79) intégrée à la paroi arrière (35) dudit boîtier de phare (30) sur laquelle est disposée ladite unité d'entraînement électrique (47), pour maintenir ledit connecteur (78); ladite unité d'entraînement électrique (47) étant fixée audit boîtier de phare (30) depuis l'intérieur dudit boîtier de phare (30) par des moyens de fixation (45, 46).

13. Un dispositif pour phare de véhicule selon la revendication 11, caractérisé en ce que ladite tige de réglage (37) tourne et se déplace vers l'avant et vers l'arrière lorsqu'elle est actionnée manuellement, tandis que ladite tige de réglage (37) se déplace vers l'avant et vers l'arrière sans tourner lorsqu'elle est actionnée automatiquement.

14. Un dispositif pour phare de véhicule, comprenant :
un boîtier de phare (30); et
un mécanisme de réglage d'axe optique (33) disposé dans ledit boîtier de lampe (30) pour incliner un réflecteur (32) sur un mécanisme de pivotement;
ledit mécanisme de réglage d'axe optique (33) comprenant :
une tige de réglage (37) est tirée entre une paroi arrière (35) dudit boîtier de phare (30) et ledit réflecteur (32) est déplacé vers l'avant et vers l'arrière; et
une unité d'entraînement électrique (47), fixée à la paroi arrière (35) dudit boîtier de phare (30) pour entraîner et régler la tige (37), afin d'incliner automatiquement ledit réflecteur; et ladite unité d'entraînement électrique (47) est disposée à l'intérieur dudit boîtier de phare (30),
caractérisé en ce que ladite unité d'entraînement électrique (47) présente un carter (48), ledit carter (48) présentant :
un organe de connexion (51) intégré audit carter (48) et relié à un connecteur servant à fournir une puissance électrique à ladite unité d'entraînement électrique (47); et
des tiges de borne de connexion (52) formées dans ledit carter (48) par un procédé de moulage à insertion;
ladite paroi arrière (35) présente une ouverture (50) pour guider ledit organe de connexion (51) vers l'extérieur dudit boîtier de phare (30) en un emplacement auquel est formé ledit organe de connexion (51); et
un organe d'étanchéité (60), pour isoler hermétiquement ladite ouverture (50), est pressé et fixé à une partie de paroi arrière (80) autour de ladite ouverture (50), simultanément à la fixation de ladite unité d'entraînement électrique (47) audit boîtier de phare (30).

15. Un dispositif pour phare de véhicule selon la revendication 14, caractérisé en ce que ledit dispositif pour phare de véhicule comprend en outre des saillies de mise en prise (81) formées sur la surface extérieure dudit organe de connexion (51) et en prise avec la paroi arrière (80) autour de ladite ouverture (50), ledit organe d'étanchéité (60) étant monté sur une base saillante dudit organe de connexion (51) et ladite unité d'entraînement électrique (47) étant fixée audit boîtier de phare (30) par la mise en prise desdites saillies de mise en prise (81) avec la paroi arrière (80) de ladite ouverture (50).

16. Un dispositif pour phare de véhicule selon la revendication 15, caractérisé en ce que la partie de paroi arrière (80), autour de ladite ouverture (50), présente une partie effilée (80a) dont le diamètre de trou diminue graduellement vers l'extérieur dudit boîtier de phare (30), ladite partie effilée (80a) étant fléchie vers l'extérieur dudit boîtier de phare (30), lorsque ledit organe de connexion (51) est inséré dans ladite ouverture (50).

17. Un dispositif pour phare de véhicule selon la revendication 14, caractérisé en ce que ledit dispositif pour phare de véhicule comprend en outre :
un organe d'encapsulage (82) servant à fixer ladite unité d'entraînement électrique (47) audit boîtier de phare (30), ledit organe d'encapsulage (82) étant placé depuis l'extérieur dudit boîtier de phare (30); et
une saillie de mise en prise, formée autour dudit organe de connexion et mise en prise avec ledit organe d'encapsulage (82).

18. Un dispositif pour phare de véhicule selon la revendication 17, caractérisé en ce que la partie de paroi arrière (80), autour de ladite ouverture (50), présente une partie effilée (80a) dont le diamètre de trou diminue graduellement vers l'extérieur dudit boîtier de phare (30), ladite partie effilée (80a) étant fléchie vers l'extérieur dudit boîtier de phare (30), lorsque ledit organe de connexion (51) est inséré dans ladite ouverture (50).
